# EUROPÄISCHE PATENTANMELDUNG

(11) **EP 4 292 749 A1**
(43) Veröffentlichungstag der Anmeldung: **20.12.2023**
(21) Anmeldenummer: 23020292.1
(22) Anmeldetag: 15.06.2023
(51) Int. Cl.: B23K 26/03, B23K 26/06, B23K 26/067, B23K 26/082, B23K 26/21

(54) **LASER-SCHWEISSVORRICHTUNG UND VERFAHREN ZUR ÜBERWACHUNG, MIT EINEM LASER-SCHWEISSKOPF UND EINER ÜBERWACHUNGSEINRICHTUNG**

(30) Priorität: 15.06.2022 DE 102022002164; 27.07.2022 DE 102022002724; 04.08.2022 DE 202022001742 U; 15.08.2022 DE 102022002959
(71) Anmelder: Fritz Stepper GmbH & Co. KG, 75180 Pforzheim (DE)
(72) Erfinder: REXROTH, Bernd, 75180 Pforzheim (DE)
(74) Vertreter: Leitner, Waldemar

(57) **Zusammenfassung**

Die Erfindung betrifft eine Laser-Schweißvorrichtung mit Laser-Schweißkopf, insbesondere für ein Werkzeug einer Bearbeitungsmaschine, der ein Gehäuse aufweist, in welches mindestens eine Lichtleitfaser (3) mündet, durch welche dem Laser-Schweißkopf ein von einer externen Strahlungsquelle erzeugter Laserstrahl (L) zuführbar ist, dass im Gehäuse eine Strahlaufbereitungseinheit (5) mit einem Eintrittsbereich (5a) und einem Austrittsbereich (5b) angeordnet ist, wobei ein aus dem Faserende (3a) der mindestens einen Lichtleitfaser (3) austretender mindestens einer Laserstrahl zum Eintrittsbereich (5a) der Strahlaufbereitungseinheit (5) geleitet ist und aus dem Austrittsbereich (5b) der Strahlaufbereitungseinheit (5) mindestens ein Laserstrahl (L1, L2) austritt, der durch eine Austrittsöffnung (7) aus dem Gehäuse des Laser-Schweißkopfs geführt wird, und dass die Laser-Schweißvorrichtung eine Überwachungseinrichtung (110) mit einer Sensoranordnung (120) aufweist, durch welche Strahlung (S), die von einem von dem oder den aus dem Laser-Schweißkopf austretenden Laser-Strahlen (L1, L2) beaufschlagten Werkstück (W) reflektiert wird, erfassbar ist. Es ist weiter vorgesehen, dass die Überwachungseinrichtung (110) die vom Werkstück (W) reflektierte Strahlung (S) in mindestens zwei Wellenlängen-Bereichen erfasst und auswertet.

## Beschreibung

Die Erfindung betrifft eine Laser-Schweißvorrichtung mit einem Laser-Schweißkopf, insbesondere für ein Werkzeug einer Bearbeitungsmaschine, wobei der Laser-Schweißkopf ein Gehäuse aufweist, in welches mindestens eine Lichtleitfaser mündet, durch welche dem Laser-Schweißkopf mindestens ein von einer externen Strahlungsquelle erzeugter Laserstrahl zuführbar ist, dass im Gehäuse eine Strahlaufbereitungseinheit mit einem Eintrittsbereich und einem Austrittsbereich angeordnet ist, wobei mindestens ein aus dem Faserende der Lichtleitfaser austretender Laserstrahl zum Eintrittsbereich der Strahlaufbereitungseinheit geleitet ist und aus dem Austrittsbereich der Strahlaufbereitungseinheit mindestens ein Laserstrahl austritt, der durch eine Austrittsöffnung aus dem Gehäuse des Laser-Schweißkopfs geführt wird, und wobei die Laser-Schweißvorrichtung eine Überwachungseinrichtung mit einer Sensoranordnung aufweist, durch welche Strahlung, die von einem von dem oder den aus dem Laser-Schweißkopf austretenden Laser-Strahlen beaufschlagten Werkstück reflektiert wird, erfassbar ist, sowie eine Laser-Schweißvorrichtung, welche einen Laser-Schweißkopf der vorgenannten Art aufweist, und ein Verfahren zur Überwachung der Schweißqualität einer Schweißverbindung.

Ein derartiger Laser-Schweißkopf sowie eine entsprechende Laser-Schweißvorrichtung sind aus der DE 10 2019 115 554 A1 bekannt. Diese Druckschrift beschreibt eine Bearbeitungsvorrichtung zur Laserbearbeitung eines Werkstücks, die einen Laser-Bearbeitungskopf nutzt, der einen Bearbeitungslaserstrahl auf das Werkstück führt. Es ist dabei vorgesehen, dass die Laserbearbeitungsvorrichtung möglichst autonom und selbständig agieren soll und somit ohne oder mit möglichst wenig Bedienpersonal in der Produktion eingesetzt werden kann. In solchen Fällen wird eine Prozessüberwachung mit einer Regelung eingesetzt, welche unerwünschtes Prozessverhalten bei der Laserbearbeitung autonom erkennt und idealerweise korrigieren kann. Eine mit dem Bearbeitungslaserstrahl koaxiale Kamerabeobachtung der Bearbeitungszone des Werkstücks stellt ein Beispiel einer derartigen Prozessbeobachtung dar. Hierbei wird ein Bearbeitungslaserstrahl mit einem Spektralbereich, der eine Wellenlänge von 1070 nm beinhaltet, verwendet. Alternativ können Diodendirektlaser (Wellenlänge typisch 940 bis 980 nm) und weitere Festkörperlaser (Wellenlänge typisch 1030 bis 1080 nm) eingesetzt werden. Eine Detektoreinrichtung erfasst die vom Werkstück reflektierte Laserstrahlung. Der Nachteil der bekannten Vorrichtung ist, dass sie nur unzureichende Ergebnisse liefert, was die Überwachung der Schweißqualität der mit dem bekannten Laserschweißkopf hergestellten Verschweißung betrifft.

Die EP 0 593 894 B1 beschreibt ein Werkzeug für eine Stanzpresse mit einer Laser-Schweißanlage. Die Stanzpresse weist einen Rahmen auf, in welchem eine Exzenterwelle in Lagern drehbar gelagert ist. Auf dieser angetriebenen Exzenterwelle sind zwei Pleuelstangen gelagert, die mit ihrem unteren Ende mit einem Stößel, der ein Oberwerkzeug trägt, gelenkig verbunden sind. Der Rahmen der Stanzpresse trägt ein Unterwerkzeug. Bei der bekannten Stanzpresse ist im Oberwerkzeug ein Stempel eingesetzt, der mit einer im Unterwerkzeug vorhandenen Matrize zusammenwirkt, um aus einem Blechband Blechteile auszustanzen, welche im Unterwerkzeug zu jeweiligen Blechpaketen vereinigt werden. Mit dem Rahmen ist eine Laserstrahlquelle verbunden, die über optische Leiter mit einer Fokussiereinrichtung in Verbindung steht, die auf dem Unterwerkzeug angeordnet ist. Im Betrieb rotiert die Exzenterwelle und bewirkt über die Pleuelstangen eine Stanzbewegung des Stößels mit dem Oberwerkzeug zur Herstellung der einzelnen Blechteile. Mit der Matrize wird bei jedem Arbeitshub des Stößels ein weiteres Blechteil auf ein sich dort befindliches Blechteil abgelegt. Sobald sich der Stempel beim Aufwärtshub eine kleine Strecke von der Matrize entfernt hat, wird durch die Laser-Schweißanlage ein Laserstrahl von äußerst kurzer Dauer gegen eine Berührungsstelle zwischen dem abgelegten Blech und dem sich darüber befindlichen Blechteil abgegeben, um die beiden Blechteile miteinander zu verschweißen. Da sich eine Schnittkante der Matrize und/oder des Stempels im Betrieb abnützt, muss die entsprechende Arbeitsfläche periodisch abgeschliffen werden, um die Schnittkante der Matrize nachzuschärfen. Daraus ergibt sich, dass die jeweilige Schweißstelle in der Matrize einer relativen Ortsveränderung unterworfen wird, so dass grundsätzlich eine neue Einstellung mindestens der Fokussiereinrichtung der Laser-Schweißanlage notwendig wird. Die Fokussiereinrichtung weist eine vorgegebene Brennweite und einen vorgegebenen Fokussierpunkt auf, der die Schweißstelle zweier Blechteile bestimmt. Sie ist dazu auf einem Tragblock eingesetzt und weist einen Punkt auf, über welchen sie an einer Seite des Tragblocks anliegt. Diese als Führungsfläche für die Fokussiereinrichtung wirkende Seite des Tragblocks verläuft genau senkrecht zur optischen Achse der Fokussiereinrichtung und der Tragblock ist derart genau bearbeitet und an einer Stelle angeordnet, die einen derart genauen Abstand von der Schweißstelle hat und mit derart genauen Verbindungsmitteln mit dem Körper des Unterwerkzeugs verbunden ist, dass durch die Optik der Fokussiereinrichtung eine bestimmte Schweißstelle genau eingehalten ist. Der Tragblock ist ein klammerförmiges Bauteil, welches zwei Wangen aufweist, welche ein Durchgangsloch zur tragenden Aufnahme der Fokussiereinrichtung umgeben. Oben sind die beiden Wangen durch einen Schlitz voneinander getrennt und durch einen Schraubbolzen miteinander verbunden. Durch das Anziehen des Schraubbolzens wird die Fokussiereinrichtung im Tragblock festgeklemmt. Die Arbeitsfläche des Körpers des Unterwerkzeugs wirkt als Positionierfläche für den Tragblock, und diese Positionierfläche fluchtet mit der Schnittkante der Matrize, die im Körper des Unterwerkzeugs eingesetzt ist. Die untere Seite des Tragblocks, über welche dieser auf der Arbeitsfläche des Körpers des Unterwerkzeugs ruht, wirkt als Führungsfläche, welche mindestens eine Höhenstellung der im Tragblock eingesetzten Fokussiereinrichtung festlegt. Der Ort und die Stellung der Fokussiereinrichtung im Tragblock bestimmt unter anderem die Schweißstelle bei der Matrize. Der horizontale Abstand des Tragblocks von der Schweißstelle und somit insbesondere der Seite des Tragblocks ist durch zwei Positionierstifte festgelegt, die in Bohrungen im Tragblock und im Körper des Unterwerkzeugs eingesetzt sind. Der Tragblock selbst ist mittels einem Schraubbolzen mit dem Körper des Unterwerkzeugs verbunden. Die Positionierstifte sind mit ihren Längsmittelachsen und der Schraubbolzen mit seiner Längsmittelachse miteinander in Linie ausgerichtet, d. h. sie bestimmen eine Ebene, in welcher die optische Achse der Fokussiereinrichtung enthalten ist. Nach den Angaben der vorgenannten Druckschrift kann dadurch der Tragblock äußerst schmal gebaut werden, so dass es möglich ist, auf einem eng begrenzten Raum mehrere, auf dieselbe Matrize wirkende Fokussiereinrichtungen der Laser-Schweißanlage zu montieren, so dass jeweils zwei Blechteile im Blechpaket an mehreren Stellen gleichzeitig miteinander verschweißt werden können. Wenn das Nachschärfen der Schnittkante der Matrize durchgeführt werden muss, wird das Unterwerkzeug ausgebaut und, bei schon entfernter Fokussiereinrichtung, der Tragblock durch Lösen des Schraubbolzens vom Körper des Unterwerkzeugs entfernt. Danach kann nun die Arbeitsfläche in bekannter Art und Weise abgeschliffen werden, um die verschiedenen Schnittkanten nachzuschärfen. Entscheidend dabei ist, dass beim Abschleifen nicht nur der Bereich des Körpers des Unterwerkzeugs, sondern gleichzeitig und in demselben Maß auch der Bereich der Positionierfläche des Körpers des Unterwerkzeugs, die die Höhenstellung des Tragblocks und folglich der Fokussiereinrichtung bestimmt, abgeschliffen wird. Damit kann nach der genannten Bearbeitung der Tragblock ohne Weiteres wieder mit dem Körper des Unterwerkzeugs verbunden werden und die Fokussiereinrichtung kann wieder montiert werden. Eine zeitraubende und aufwendige Neuausrichtung insbesondere des Tragblocks auf die Schweißstelle, die sich relativ nicht zur Positionierfläche verschoben hat, soll somit wegfallen.

Die aus der vorgenannten Druckschrift bekannte Stanzpresse mit einer Laser-Schweißanlage erlaubt es zwar, innerhalb einer einzigen Vorrichtung ein Blechteil zu stanzen und mit einem weiteren Blechteil zu verschweißen. Nachteilig ist aber, dass eine Anpassung der Laser-Schweißanlage auf geänderte Einsatzbedingungen, die eine Neuausrichtung des Laserstrahls erforderlich machen, äußerst schwierig ist.

Es ist daher Aufgabe der Erfindung, eine Laser-Schweißvorrichtung mit einem Laser-Schweißkopf der eingangs genannten Art, insbesondere für ein Werkzeug einer Werkzeugmaschine, derart weiterzubilden, dass eine verbesserte Überwachung der von der Laser-Schweißvorrichtung erzielten Schweißqualität ermöglicht wird. Außerdem soll ein für die erfindungsgemäße Laser-Schweißvorrichtung besonders geeignetes Werkzeug sowie eine für das erfindungsgemäße Werkzeug besonders geeignete Werkzeugmaschine, insbesondere eine Bearbeitungsmaschine wie eine Stanzmaschine, geschaffen werden. Des Weiteren soll ein Verfahren zur Überwachung der Schweißqualität einer Laser-Schweißvorrichtung geschaffen werden.

Diese Aufgabe wird durch die erfindungsgemäße Laser-Schweißvorrichtung dadurch gelöst, dass die Überwachungseinrichtung die vom Werkstück reflektierte Strahlung in mindestens zwei Wellenlängen-Bereichen erfasst und auswertet.

Durch die erfindungsgemäßen Maßnahmen wird in vorteilhafter Art und Weise eine Laser-Schweißvorrichtung geschaffen, welche sich dadurch auszeichnet, dass durch die Erfassung und Auswertung des vom Werkstück reflektierten Lichts im Bereich der Prozessstrahlung, also des verwendeten Laserlichts sowie im Bereich des sichtbaren Lichts, vorzugsweise im Bereich zwischen 400 und 850 nm, und/oder im Infrarotbereich, vorzugsweise im Bereich zwischen 1200 und 1700 nm, verbesserte Aussagen über die Schweißqualität der mit der erfindungsgemäßen Laser-Schweißvorrichtung gefertigten Schweißstelle machbar sind. Eine derartige Maßnahme besitzt den Vorteil, dass hierdurch in einfacher Art und Weise - vorzugsweise fortlaufend - die Qualität der Schweißstelle, welche von dem mindestens einen aus dem erfindungsgemäßen Laser-Schweißkopf austretenden Laserstrahl hergestellt wird, überprüft und/oder der mindestens eine Laserstrahl geregelt werden kann.

Das erfindungsgemäße Werkzeug zeichnet sich dadurch aus, dass es die erfindungsgemäße Laser-Schweißvorrichtung verwendet.

Die erfindungsgemäße Bearbeitungsmaschine ist dadurch gekennzeichnet, dass sie das erfindungsgemäße Werkzeug verwendet.

Das erfindungsgemäße Verfahren zur Überwachung der Schweißqualität sieht vor, dass die erfindungsgemäße Laser-Schweißvorrichtung verwendet wird.

Eine vorteilhafte Weiterbildung der Erfindung sieht vor, dass von der Überwachungseinrichtung der erfindungsgemäßen Laser-Schweißvorrichtung reflektierte Strahlung im Infrarotbereich, insbesondere im mittleren Infrarotbereich, hierbei insbesondere in einem Wellenlängen-Bereich zwischen 1200 und 1700 nm, oder in einem oder in mehreren Teilbereichen davon erfasst und ausgewertet wird. Je höher die Anteile der reflektierten infraroten Strahlung ist, desto größer sind normalerweise die Schweißpunkte.

Eine weitere vorteilhafte Weiterbildung der Erfindung sieht vor, dass die Überwachungseinrichtung die reflektierte Strahlung außer im Bereich der Wellenlänge des vom Laser-Schweißkopf emittierten Laserlichts auch in einem Bereich des sichtbaren Lichts, vorzugsweise in einem Bereich zwischen 400 und 850 nm, oder in einem oder in mehreren Teilbereichen des sichtbaren Bereichs erfasst und auswertet. Eine derartige Maßnahme besitzt den Vorteil, dass durch die Erfassung der reflektierten Strahlung in einem Bereich des sichtbaren Lichts in einfacher Art und Weise die Temperatur der Schweißstelle ermittelt werden kann. Dies erlaubt es, bei einer zu hohen Temperatur, insbesondere bei einer Temperatur oberhalb des Schmelzpunkts des aufgeschmolzenen Materials, die Leistung der Laserstrahlung zu verändern, insbesondere zu reduzieren, um insbesondere einer Porosität der Schweißstelle entgegenzuwirken.

Eine weitere vorteilhafte Weiterbildung der Erfindung - welche von eigenständiger patentbegründender Bedeutung ist - sieht vor, dass die Strahlaufbereitungseinheit des Laser-Schweißkopfs der Laser-Schweißvorrichtung als ein Galvanometerscanner ausgebildet ist. Eine derartige Maßnahme besitzt den Vorteil, dass hierdurch in besonders einfacher Art und Weise eine flexible Adaption mindestens eines Laserstrahls an die für einen vom erfindungsgemäßen Laser-Schweißkopf durchgeführten Bearbeitungsvorgänge ermöglich ist.

Eine weitere vorteilhafte Weiterbildung der Erfindung - welche wiederum von selbständig patentbegründender Bedeutung ist - sieht vor, dass der Abstand zwischen dem Faserende der Lichtleitfaser und dem Eintrittsbereich der Strahlaufbereitungseinheit des Laser-Schweißkopfs veränderbar ist. Durch diese erfindungsgemäßen Maßnahmen wird in vorteilhafter Art und Weise ein kompakt bauender Laser-Schweißkopf für eine Laser-Schweißvorrichtung geschaffen, welcher eine einfache Anpassung der Fokuslage und/oder des Fokusdurchmessers mindestens eines Laserstrahls ermöglicht.

Eine weitere vorteilhafte Weiterbildung der Erfindung sieht vor, dass die oder mindestens eine der Lichtleitfasern, über die dem Laser-Schweißkopf das von einer externen Strahlungsquelle erzeugte Laserlicht zuführbar ist, und/oder die Strahlaufbereitungseinheit im Gehäuse beweglich, insbesondere verschiebbar, aufgenommen sind. Diese Maßnahme besitzt den Vorteil, dass durch eine einfach durchzuführende Änderung des Relativabstandes zwischen dem Faserende der Lichtleitfaser und dem Eintrittsbereich der Strahlaufbereitungseinheit die Fokuslage und/oder der Fokusdurchmesser mindestens eines aus dem erfindungsgemäßen Laser-Schweißkopf austretenden Laserstrahls verändert werden kann. Bevorzugt wird, dass insbesondere die oder mindestens eine der in das Gehäuse des erfindungsgemäßen Laser-Schweißkopfs mündenden Lichtleitfasern verschiebbar in diesem angeordnet ist, während die Strahlaufbereitungseinheit unverschiebbar im Gehäuse angeordnet ist. Eine derartige Maßnahme besitzt den Vorteil eines besonders einfachen geometrisch-konstruktiven Aufbaus, so dass ein derartig ausgebildeter Laser-Schweißkopf in vorteilhafter Art und Weise kompakt baut.

Eine weitere vorteilhafte Weiterbildung der Erfindung sieht vor, dass dem Gehäuse des erfindungsgemäßen Laser-Schweißkopfs zwei oder mehr Lichtleitfasern zugeführt sind, und dass der Relativabstand zwischen der Strahlaufbereitungseinheit und mindestens zwei der in das Gehäuse mündenden Lichtleitfasern, insbesondere durch ein Verschieben dieser Lichtleitfasern, veränderbar ist. Bevorzugt wird, dass jede der mindestens zwei Lichtleitfasern unabhängig von der anderen Lichtleitfaser verschiebbar ist. Diese Maßnahme besitzt den Vorteil, dass hierdurch in einfacher Art und Weise die Fokuslage und/oder der Fokusdurchmesser mindestens zweier aus dem erfindungsgemäßen Laser-Schweißkopf austretenden Laserstrahlen in einfacher Art und Weise verändert werden kann. Ein weiterer Vorteil der Verwendung von zwei oder mehreren Lichtleitfasern zur Zuführung des Laserlichts besitzt den Vorteil, dass hierdurch die Auslösung der aus den einzelnen Faserenden austretenden Laserimpulse zeitlich gesteuert werden kann.

Eine weitere vorteilhafte Weiterbildung der Erfindung sieht vor, dass der Laser-Schweißkopf mindestens eine Spanneinheit mit einer Spannhülse und einem Spannring aufweist, durch welche die mindestens Lichtleitfasern im Laser-Schweißkopf in mindestens zwei Positionen lagefixierbar ist. Eine derartige Maßnahme besitzt den Vorteil, dass die Relativposition zwischen Strahlaufbereitungseinheit und dem Faserende leicht veränderbar ist.

Eine weitere vorteilhafte Weiterbildung der Erfindung sieht vor, dass der Laser-Schweißkopf ein Innenrohr aufweist, welches im Gehäuse drehbar angeordnet ist und die Strahlaufbereitungseinheit aufnimmt. Durch ein Drehen des Innenrohrs und somit der in ihr aufgenommenen Strahlaufbereitungseinheit kann eine Schwenkbewegung des oder der aus dem Gehäuse austretenden Laserstrahlen erzielt werden.

Eine weitere vorteilhafte Weiterbildung der Erfindung sieht vor, dass der Laser-Schweißkopf eine Kühleinrichtung aufweist, durch welche aus seinem Gehäuse Wärme abführbar ist. Gemäß einer bevorzugten Ausgestaltung dieser Kühleinrichtung ist vorgesehen, dass in einer das Innenrohr aufnehmenden Halterung ein Kühlkanal vorgesehen ist, welcher das Innenrohr zumindest über einen Teil seines Umfangsbereichs umschließt.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, welche im Folgenden anhand der Figuren beschrieben werden. Es zeigen:
- Figur 1: eine perspektivische Darstellung eines ersten Ausführungsbeispiels einer Laser-Schweißvorrichtung,
- Figur 2: eine Draufsicht auf das erste Ausführungsbeispiel der Figur 1,
- Figur 3: einen Schnitt entlang der Linie A-A der Figur 2,
- Figur 4: einen Schnitt entlang der Linie B-B der Figur 2,
- Figur 5: eine perspektivische Darstellung eines zweiten Ausführungsbeispiels einer Laser- Schweißvorrichtung,
- Figur 6: eine Draufsicht auf das zweite Ausführungsbeispiel der Figur 5, und
- Figur 7: einen Schnitt entlang der Linie C-C der Figur 6.

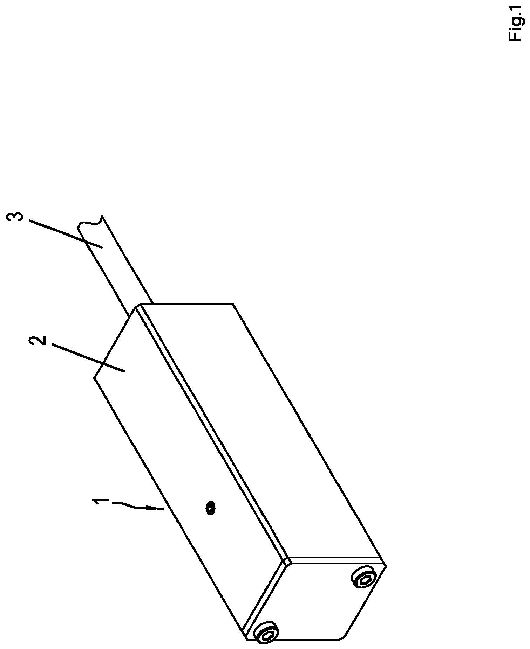

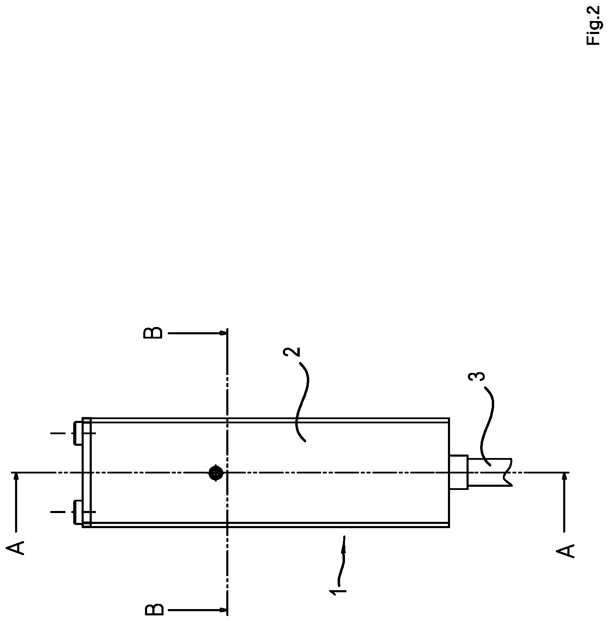

In den Figuren 1 bis 4 ist ein erstes Ausführungsbeispiel einer Laser-Schweißvorrichtung mit einem Laser-Schweißkopf 1 dargestellt, welche insbesondere für ein Werkzeug einer Bearbeitungsmaschine, insbesondere einer Stanzmaschine, geeignet ist. Ein derartiger Laser-Schweißkopf 1 ist grundsätzlich bekannt und wird daher nachfolgend nur soweit beschrieben, als dies für das Verständnis seines Aufbaus und seiner Funktionsweise erforderlich ist.

Der Laser-Schweißkopf 1 weist ein Gehäuse 2 auf, in welches mindestens eine Lichtleitfaser 3 mündet, über die dem Laser-Schweißkopf 1 ein von einer nichtgezeigten Strahlungsquelle erzeugter Laserstrahl zuführbar ist. In den Figuren ist nur eine einzige Lichtleitfaser 3 dargestellt. Dem Fachmann ist aber aus nachfolgender Beschreibung ersichtlich, dass es auch möglich ist, dem Gehäuse 2 des Laser-Schweißkopfs 1 mehr als zwei Lichtleitfasern zuzuführen, aus deren Faserenden jeweils mindestens ein Laserstrahl L austritt. Der einfacheren Darstellung und Erläuterung halber wird aber bei der nachfolgenden Beschreibung der Figuren davon ausgegangen, dass dem Laser-Schweißkopf 1 nur eine einzige Lichtleitfaser 3 zugeführt ist. Der aus der Lichtleitfaser 3 austretende Laserstrahl L gelangt zu einer Strahlaufbereitungseinheit 5, in welcher er in zwei Laserstrahlen L1, L2 gespalten und entsprechend aufbereitet wird. Die beiden Laserstrahlen L1, L2 gelangen dann zu einem Umlenkspiegel 6 und treten durch eine Öffnung 7 aus dem Gehäuse 2 des Laser-Schweißkopfs 1 aus. In der Öffnung 7 ist ein Schutzglas 8 vorgesehen.

Die Strahlaufbereitungseinheit 5 dient dazu, den ihr über die mindestens eine Lichtleitfaser 3 zugeführten Laserstrahl aufzubereiten, insbesondere in eine Anzahl von n Teilstrahlen aufzuspalten, z. B. in n = 2 Teilstrahlen bei einem bifokalen Laser-Schweißkopf 1. Dem Fachmann ist aus nachfolgender Beschreibung ersichtlich, dass der vorgenannte Fall eines bifokalen Laser-Schweißkopfs nur exemplarischen Charakter besitzt. Es ist natürlich auch möglich, den Laser-Schweißkopf 1 als einen monofokalen Laser-Schweißkopf (n = 1) oder als einen bifokalen bzw. multifokalen Laser-Schweißkopf 1, aus dessen Öffnung 7 zwei bzw. mehr als zwei Laserstrahlen austreten, auszubilden. Um dies zu erreichen, weist die Strahlaufbereitungseinheit 5 eine entsprechende Anzahl von optischen Elementen, insbesondere Linsen, Strahlteiler, etc. auf. Es kann vorgesehen sein, dass die Strahlaufbereitungseinheit 5 auswechselbar im Gehäuse 2 des Laser-Schweißkopfs 1 angeordnet ist. Eine derartige Maßnahme besitzt den Vorteil, dass ein rasches Umrüsten des Laser-Schweißkopfs 1, z. B. von einem monofokalen auf einen bifokalen oder multifokalen Laser-Schweißkopf (oder umgekehrt) möglich ist. Es ist natürlich auch möglich, anstelle eines Austausches der im Gehäuse 2 aufgenommenen Strahlaufbereitungseinheit 5 diese entsprechend zu modifizieren, z. B. durch den Austausch eines Linsenpakets gegen ein anderes Linsenpaket und/oder durch Hinzufügen oder Wegnehmen eines oder mehrerer Linsenelemente.

Es wird bevorzugt, dass die Strahlaufbereitungseinheit 5 als eine galvanometrische Strahlaufbereitungseinheit, insbesondere als Galvanometerscanner, ausgeführt ist. Eine derartige Maßnahme, welche von eigenständiger Bedeutung ist, besitzt den Vorteil, dass hierdurch in einfacher Art und Weise die Fokuslage und/oder der Fokusdurchmesser eines oder mehrerer Laserstrahlen verändert werden kann.

Um nun einen derartigen Laser-Schweißkopf 1 in einem Werkzeug einer Werkzeugmaschine, insbesondere eines Werkzeugs, welches ein gleichzeitiges Stanzen und Schweißen von Werkstückteilen erlaubt, verwenden zu können, ist es erforderlich, dass die Fokuslage des oder der aus dem Laser-Schweißkopf 1 austretenden Laserstrahlen auf eine oder mehrere zur schweißenden Bearbeitung des Werkstücks erforderlichen Schweißstellen auszurichten. Dies muss insbesondere hinsichtlich ihres Fokuslage und ihres Fokusdurchmessers, also des Durchmessers des an der Schweißstelle auf das Werkstück auftretenden Laserstrahls L1 bzw. L2, geschehen.

Um dies einfach durchführen zu können, ist beim beschriebenen Laser-Schweißkopf 1 vorgesehen, dass die Lichtleitfaser 3 beweglich im Laser-Schweißkopf 1 aufgenommen ist, insbesondere in einer axialen Richtung relativ zur Strahlaufbereitungseinheit 5 verschiebbar ist. Die Änderung des Abstands zwischen einem Faserende 3a der Lichtleitfaser 3 und einem vorderen Eintrittsbereich 5a der Strahlaufbereitungseinheit 5 bewirkt eine Änderung der Fokuslage des oder der aus einem Austrittsbereich 5b der Strahlaufbereitungseinheit 5 austretenden Laserstrahlen.

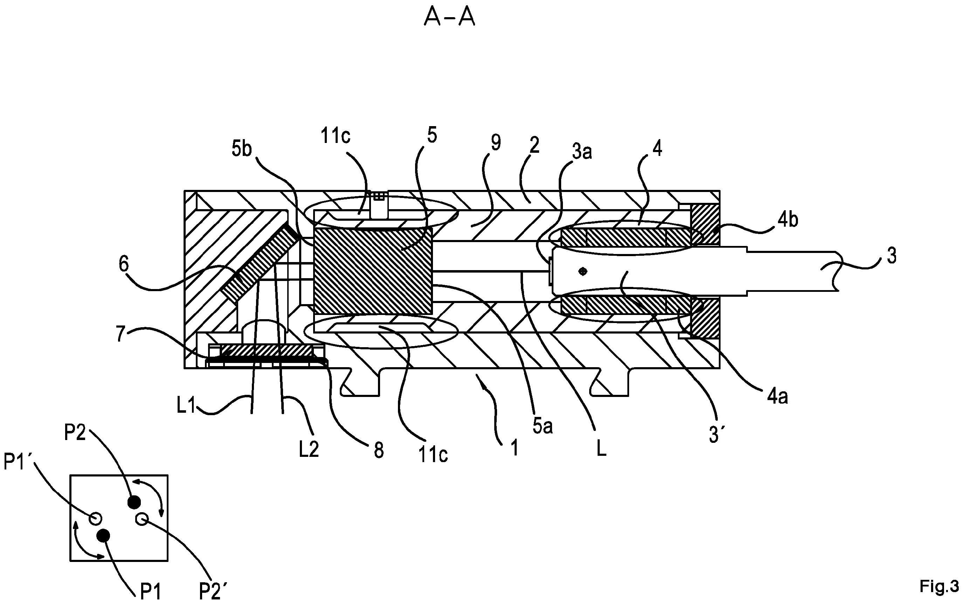

Um dies beim beschriebenen Ausführungsbeispiel des Laser-Schweißkopfs 1 in einfacher Art und Weise zu ermöglichen, ist vorgesehen, dass - wie am besten aus Figur 3 ersichtlich ist - die Lichtleitfaser 3 in einer Spanneinheit 4 verschiebbar aufgenommen ist. Die Spanneinheit 4 weist eine Spannhülse 4a auf, welche mit einem Spannring 4b zusammenwirkt. Durch ein Zudrehen des Spannrings 4b wird die Lichtleitfaser 3 in der Spannhülse 4a geklemmt und derart im Gehäuse 2 des Laser-Schweißkopfs 1 in einer bestimmten Lage fixiert. Durch ein Aufdrehen des Spannrings 4b wird diese Klemmung aufgehoben, so dass die Lichtleitfaser 3 zur Änderung des Abstands zwischen Faserende 3a und Eintrittsbereich 5b der Strahlaufbereitungseinheit 5 bewegt werden kann. Nachdem die Lichtleitfaser 3 in ihrer gewünschten neuen Lage positioniert wurde, wird der Spannring 4b wieder zugedreht, so dass die Lichtleitfaser 3 in dieser Position lagefixiert im Gehäuse 2 aufgenommen ist.

Dem Fachmann ist aber ersichtlich, dass die Änderung des Relativabstands zwischen Faserende 3a und Eintrittsbereich 5b auf eine andere Art und Weise als die vorstehend beschriebene Konstruktion erreicht werden kann. Zum Beispiel ist es möglich, den vorderen Endbereich 3' der Lichtleitfaser 3 auf einem im Gehäuse 2 verschiebbaren Schlitten anzuordnen. Auch eine Kombination der beiden vorgenannten Maßnahmen - Spanneinheit 4 und verschiebbarer Schlitten - ist möglich.

Ebenso ist es denkbar, dass die Strahlaufbereitungseinheit 5 verschiebbar im Gehäuse 2 angeordnet ist, so dass durch ein Verschieben der Strahlaufbereitungseinheit 5 - bei feststehender Lichtleitfaser 3 - eine Änderung der Fokuslage und/oder des Fokusdurchmessers des oder der aus dem Gehäuse 2 austretenden Laserstrahlen erzielbar ist. Aber auch eine Kombination beider Maßnahmen - verschiebbare Strahlaufbereitungseinheit 5 und verschiebbare Lichtleitfaser 3 - ist möglich.

Dem Fachmann ist aus vorstehender Beschreibung ersichtlich, dass die dort aufgeführten Maßnahmen nur exemplarischen Charakter besitzen. Wesentlich ist, dass der Abstand zwischen dem Faserende 3a der Lichtleitfaser 3 und dem Eintrittsbereich 5a der Strahlaufbereitungseinheit 5 zur Anpassung der Fokuslage und/oder des Fokusdurchmessers des der Strahlaufbereitungseinheit 5 zugeführten Laserstrahls L veränderbar ist. Ob hierzu nur die Lichtleitfaser 3 oder nur die Strahlaufbereitungseinheit 5 im Gehäuse 2 des Laser-Schweißkopfs 1 bewegt werden, oder ob eine Bewegung dieser beiden vorgenannten Komponenten stattfindet, besitzt nur sekundären Charakter. Es wird aber bevorzugt, dass die Strahlaufbereitungseinheit 5 nicht bewegt wird und die Änderung des Relativabstands zwischen deren Eintrittsbereich 5a und dem Faserende 3a der Lichtleitfaser 3 durch eine Bewegung der Lichtleitfaser 3, insbesondere durch eine Verschiebung in axialer Richtung, erreicht wird.

Wie bereits vorstehend ausgeführt, ist der beschriebene Laser-Schweißkopf 1 nicht auf die Konstellation, dass dem Gehäuse 2 nur eine einzige Lichtleitfaser 3 zugeführt wird, beschränkt. Vielmehr ist es möglich, zwei oder mehr Lichtleitfasern 3 zu verwenden, um den Laser-Schweißkopf 1 das von einer externen Strahlungsquelle erzeugte Laserlicht zuzuführen. Es wird dann bevorzugt, dass nicht nur der Relativabstand zwischen dem Eintrittsbereich 5a der Strahlaufbereitungseinheit 5 und dem Faserende 3a der Lichtleitfaser 3 verändert werden kann, sondern dass eine derartige Maßnahme für mindestens eine weitere und vorzugsweise alle weiteren Lichtleitfasern durchführbar ist. Es wird dann wieder bevorzugt, dass mindestens eine der weiteren Lichtleitfasern beweglich, insbesondere in axialer Richtung verschiebbar, im Gehäuse 2 des Laser-Schweißkopfs 1 angeordnet sind, wie dies z. B. bei der Lichtleitfaser 3 beschrieben wurde.

Vorzugsweise ist vorgesehen, dass der oder die aus dem Laser-Schweißkopf 1 austretenden Laserstrahlen L1, L2 nicht nur hinsichtlich ihrer Fokuslage ausgerichtet sind, sondern dass auch die Winkelposition der Laserstrahlen veränderlich ist. Nachstehende Beschreibung geht von einem bifokalen Laser-Schweißkopf 1 aus. Dem Fachmann ist aber ersichtlich, dass dies die Allgemeinheit der nachfolgenden Ausführungen nicht einschränkt.

In der in der linken unteren Ecke befindlichen Funktionsskizze der Figur 3 sind schematisch zwei Laserstrahlen L1, L2 durch Kreise P1 und P2 dargestellt. Annahmegemäß repräsentieren die Kreise P1 und P2 die aus dem LaserSchweißkopf 1 in seiner aktuellen Konfiguration austretenden Laserstrahlen L1, L2.

Um nun die Ausrichtung der Laserstrahlen L1 und L2 von den durch die Kreise P1 und P2 repräsentierten Positionen in hier durch die Kreise P1', P2' repräsentierte Positionen durchführen zu können, ist beim beschriebenen Laser-Schweißkopf 1 - wie am besten aus Figur 3 ersichtlich - vorgesehen, dass im Gehäuse 2 ein Innenrohr 9 drehbar gelagert ist. Die Strahlaufbereitungseinheit 5 ist im Innenrohr 9 angeordnet, so dass durch eine Rotation des Innenrohrs 9 auch die Strahlaufbereitungseinheit 5 rotiert wird, wodurch die vorstehend beschriebene Änderung der Winkelausrichtung der Laserstrahlen L1, L2 erzielt werden kann.

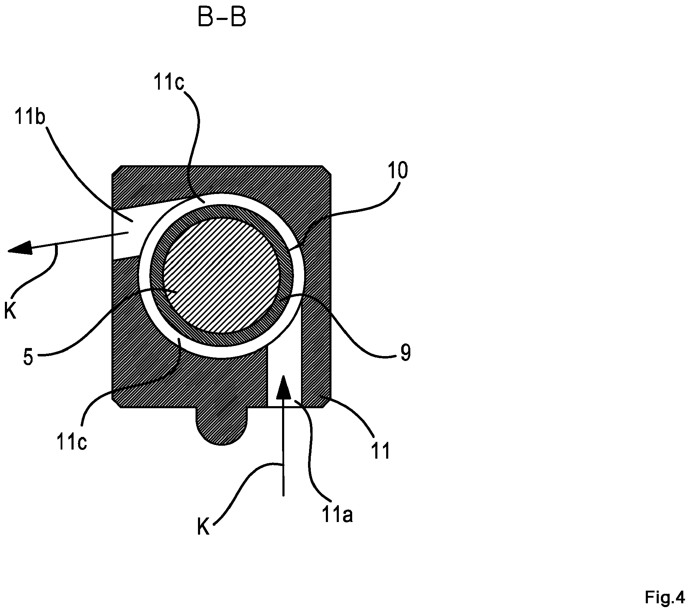

Eine weitere vorzugsweise vorgesehene Ausgestaltung sieht nun vor, dass - wie am besten aus der Figur 4 ersichtlich ist - der Laser-Schweißkopf 1 eine Kühleinrichtung 10 aufweist, welche es erlaubt, aus dem Inneren des Gehäuses 2 Wärme abzuführen, insbesondere die Strahlaufbereitungseinheit 5 zu kühlen. Hierzu ist vorzugsweise vorgesehen, dass das in einer Halterung 11 aufgenommene Innenrohr 9 von einem Kühlmedium K zumindest bereichsweise umströmt wird. Das Kühlmedium K wird der Halterung 11 durch eine Eintrittsöffnung 11a zugeführt und verlässt diese durch eine Austrittsöffnung 11b. Das Kühlmedium K tritt durch die Eintrittsöffnung 11a ein, durchströmt dann einen von der Eintrittsöffnung 11a zur Austrittsöffnung 11b verlaufenden Kühlkanal 11c der Halterung 11. Vorzugsweise ist vorgesehen, dass der Kühlkanal 11c umlaufend ausgebildet ist. Als Kühlmittel wird vorzugsweise Druckluft verwendet, es ist aber auch möglich, ein flüssiges oder ein anderes gasförmiges Kühlmittel zu verwenden.

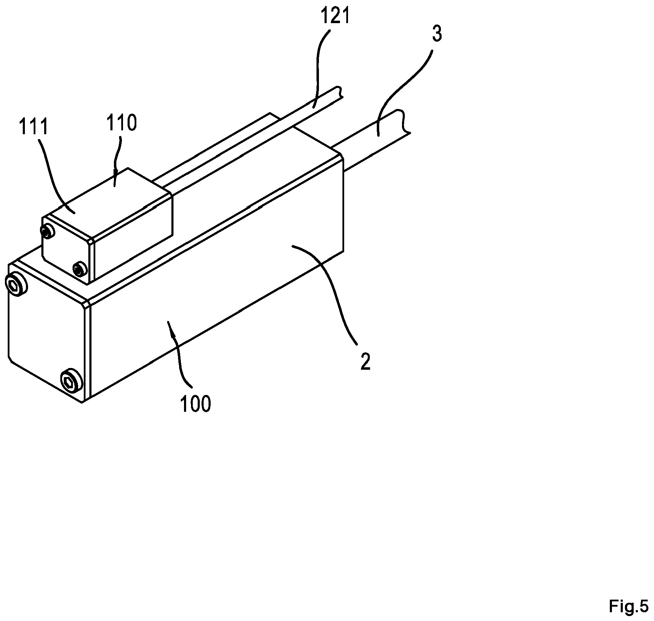

In den Figuren 5 bis 7 ist nun ein zweites Ausführungsbeispiel einer Laser-Schweißvorrichtung mit einem Laser-Schweißkopf 100 beschrieben, welches seinem Grundaufbau nach demjenigen des ersten Ausführungsbeispiels entspricht. Korrespondierende Bauteile werden daher mit den gleichen Bezugszeichen versehen und hinsichtlich ihres Aufbaus und ihrer Funktion nicht mehr erneut beschrieben. Der Laser-Schweißkopf 100 des zweiten Ausführungsbeispiels entspricht dem Laser-Schweißkopf 1 des ersten Ausführungsbeispiels, weist aber eine allgemein mit 110 bezeichnete Überwachungseinrichtung zur Überwachung der Bearbeitungsqualität, insbesondere der Schweißqualität, die bei der Beaufschlagung eines Werkstücks durch mindestens einen aus dem Gehäuse 2 des Laser-Schweißkopfs 100 austretenden Laserstrahl L1, L2 erzielt wird. Wie aus den Figuren 4 und 5 ersichtlich ist, ist diese Einrichtung 110 auf dem Gehäuse 2 des Laser-Schweißkopfs 100 aufgesetzt. Dies hat den Vorteil, dass hierdurch eine kompakte Ausgestaltung der aus dem Laser-Schweißkopf 100 und der Überwachungseinrichtung 110 bestehenden Laser-Schweißvorrichtung erzielt werden kann.

Dem Fachmann ist aber ersichtlich, dass eine derartige Anbringung der Überwachungseinrichtung 110 auf dem Gehäuse 2 des Laser-Schweißkopfs 100 nicht zwingend ist. Es ist auch möglich, die Überwachungseinrichtung 110 Schweißkopf-extern vorzusehen, so dass auch ein Laser-Schweißkopf 1 gemäß den Figuren 1 bis 4 bei der beschriebenen Laser-Schweißvorrichtung eingesetzt werden kann.

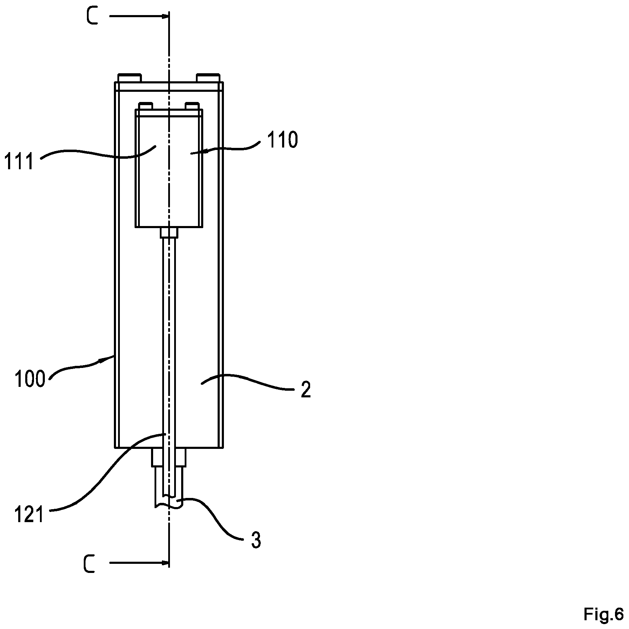

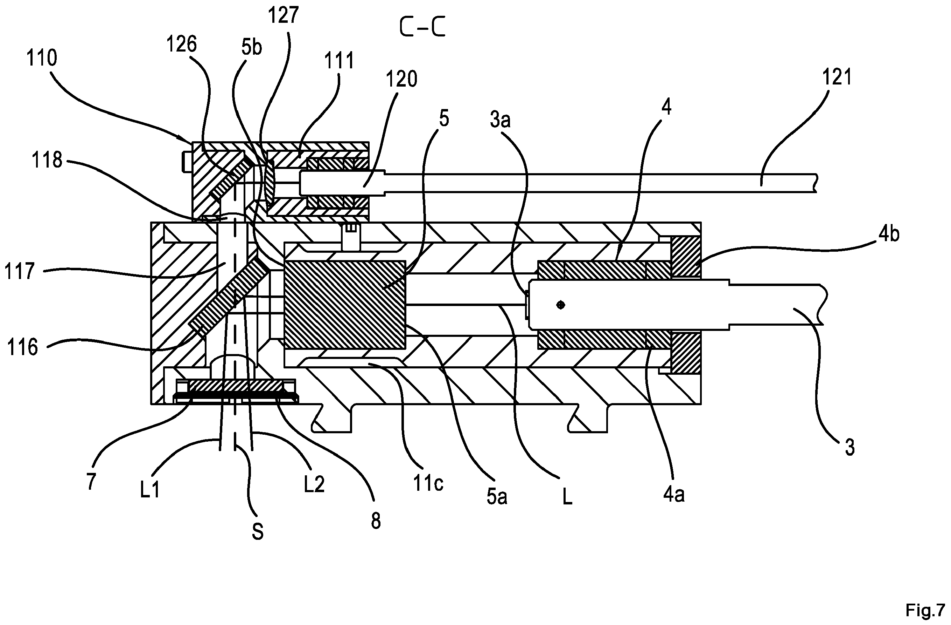

Die Figur 7 zeigt nun einen Schnitt entlang der Linie C-C der Figur 6. Man erkennt wieder den Laser-Schweißkopf 1, wie er in Figur 3 dargestellt ist. Die zur Ausgestaltung des Laser-Schweißkopfs 1 des ersten Ausführungsbeispiels gemachten Ausführungen gelten beim Laser-Schweißkopf 100 entsprechend.

Der Laser-Schweißkopf 100 des zweiten Ausführungsbeispiels unterscheidet sich aber von demjenigen des ersten Ausführungsbeispiels dadurch, dass ein Umlenkspiegel 116 halb-durchlässig ausgebildet ist, so dass zwar die aus der Strahlaufbereitungseinheit 5 austretenden Laserstrahlen L1, L2 - wie beim Umlenkspiegel 6 des ersten Ausführungsbeispiels - umgelenkt werden, aber vom Werkstück reflektierte Strahlung S, welche durch die Öffnung 7 eintritt, den Umlenkspiegel 116 passieren und über einen - im ersten Ausführungsbeispiel nicht vorhandenen - Strahlengang 117 zu einer Öffnung 118 des Gehäuses 2 gelangen. Über dieser Öffnung 118 ist ein Messkopf 111 angeordnet, welcher dazu dient, die vom Werkstück und insbesondere von der Schweißstelle ausgesandten Strahlung zu erfassen. Hierzu ist beim beschriebenen Ausführungsbeispiel vorgesehen, dass der Messkopf 111 einen Umlenkspiegel 126 aufweist, welcher die dem Messkopf 111 zugeführten Strahlen umlenkt und über eine Kollimationslinse 127 zu einer Sensoranordnung 120 leiten. Signalleitungen 121 führen dann die Messsignale der Sensoranordnung 120 zu einer Auswerteeinrichtung (nicht gezeigt).

Es wird bevorzugt, dass die Sensoranordnung 120 der Überwachungseinrichtung 110 die vom Werkstück und insbesondere von der Schweißstelle reflektierte Strahlung S in mindestens zwei unterschiedlichen Bereichen auswertet, nämlich im Bereich der Prozessstrahlung, also des verwendeten Laserlichts, z. B. bei einem YAG-Laser im Wellenlängen-Bereich von 1460 nm, sowie im Bereich des sichtbaren Lichts, beispielsweise im Wellenlängen-Bereich zwischen 400 und 850 nm, und/oder im Infrarotbereich, also beispielsweise im Wellenlängen-Bereich zwischen 1200 und 1700 nm. Es ist für den Fachmann ersichtlich, dass die Erfassung und/oder Auswertung der reflektierten Strahlung S im Bereich des sichtbaren Lichts und/oder im infraroten Bereich nicht über die gesamte Bandbreite der vorgenannten Wellenlängen-Bereiche erfolgen muss, so dass es durchaus ausreicht, dass die Strahlung S in einem Teilbereich oder in mehreren Teilbereichen dieser Wellenlängen-Bereiche - sichtbares Licht, vorzugsweise zwischen 400 und 850 nm, bzw. infrarotes Licht, vorzugsweise zwischen 1200 und 1700 nm - erfasst und ausgewertet wird.

Eine große Intensität der reflektierten Prozessstrahlung spricht im Allgemeinen dafür, dass die Schweißpunkte nur unzureichend ausgebildet sind: Ein hoher Anteil von reflektierter Prozessstrahlung charakterisiert, dass an der Schweißstelle eine hinreichende Schmelze noch nicht ausgebildet ist.

Je höher der infrarote Anteil der reflektierten Strahlung S ist, desto größer sind normalerweise die Schweißpunkte.

Die Messung der reflektierten Strahlung S im sichtbaren Bereich erlaubt es in einfacher Art und Weise die Temperatur der Schweißstelle zu erfassen. Hierdurch können insbesondere zu hohe Temperaturen, die zu einer Porosität der Schweißstelle führen können, vermieden werden.

Es ist im Allgemeinen ausreichend, die reflektierte Strahlung S außer im Bereich der Wellenlänge der Prozessstrahlung auch in einem der beiden anderen Bereiche, also entweder im Bereich des sichtbaren Lichts oder im Infrarotbereich zu erfassen und auszuwerten. Bevorzugt wird jedoch, dass die reflektierte Strahlung S in den drei vorgenannten Bereichen - Prozessstrahlung, sichtbares Licht und infrarote Strahlung - erfasst und ausgewertet wird.

Die aktuell detektierten Werte werden von der Auswerteeinrichtung mit zuvor erfassten Daten verglichen. Hierdurch ist es in einfacher Art und Weise möglich, vorzugsweise fortlaufend die Qualität der von dem mindestens einen aus dem Laser-Schweißkopf 1 austretenden Laserstrahl L1, L2 dargestellten Schweißstelle zu überprüfen und/oder den mindestens einen Laserstrahl L1, L2 entsprechend zu regeln. Insbesondere durch eine Änderung der Fokuslage und/oder des Fokusdurchmessers mindestens eines Laserstrahls L1, L2 kann eine Verbesserung der Schweißqualität erreicht werden.

## Patentansprüche

1. Laser-Schweißvorrichtung mit Laser-Schweißkopf (1; 100), insbesondere für ein Werkzeug einer Bearbeitungsmaschine, der ein Gehäuse (2) aufweist, in welches mindestens eine Lichtleitfaser (3) mündet, durch welche dem Laser-Schweißkopf (1) ein von einer externen Strahlungsquelle erzeugter Laserstrahl (L) zuführbar ist, dass im Gehäuse (2) eine Strahlaufbereitungseinheit (5) mit einem Eintrittsbereich (5a) und einem Austrittsbereich (5b) angeordnet ist, wobei ein aus dem Faserende (3a) der mindestens einen Lichtleitfaser (3) austretender mindestens einer Laserstrahl zum Eintrittsbereich (5a) der Strahlaufbereitungseinheit (5) geleitet ist und aus dem Austrittsbereich (5b) der Strahlaufbereitungseinheit (5) mindestens ein Laserstrahl (L1, L2) austritt, der durch eine Austrittsöffnung (7) aus dem Gehäuse (2) des Laser-Schweißkopfs (1) geführt wird, und dass die Laser-Schweißvorrichtung eine Überwachungseinrichtung (110) mit einer Sensoranordnung (120) aufweist, durch welche Strahlung (S), die von einem von dem oder den aus dem Laser-Schweißkopf (1; 100) austretenden Laser-Strahlen (L1, L2) beaufschlagten Werkstück (W) reflektiert wird, erfassbar ist, **dadurch gekennzeichnet, dass** die Überwachungseinrichtung (110) die vom Werkstück (W) reflektierte Strahlung (S) in mindestens zwei Wellenlängen-Bereichen erfasst und auswertet.

2. Laser-Schweißkopf nach Anspruch 1, **dadurch gekennzeichnet, dass** die Überwachungseinrichtung (110) die reflektierte Strahlung (S) im Bereich der Wellenlänge des oder der vom Laser-Schweißkopf (1; 100) austretenden Laser-Strahlen (L1, L2) sowie im infraroten Bereich, vorzugsweise in einem zwischen 1200 und 1700 nm liegenden Bereich, oder in einem oder in mehreren Teilbereichen des vorgenannten infraroten Bereichs, und/oder im Bereich des sichtbaren Lichts, vorzugsweise in einem zwischen 450 und 850 nm liegenden Bereich, oder in einem oder in mehreren Teilbereichen des vorgenannten sichtbaren Bereichs erfasst und auswertet.

3. Laser-Schweißvorrichtung nach Anspruch 1, **dadurch gekennzeichnet, dass** der Laser-Schweißkopf (100) einen Umlenkspiegel (116) aufweist, so dass die vom Werkstück (W) reflektierte Strahlung (S) über einen Strahlengang (117) zu einer Öffnung (118) des Gehäuses (2) gelangt.

4. Laser-Schweißvorrichtung nach Anspruch 1, **dadurch gekennzeichnet, dass** über der Öffnung (118) des Gehäuses (2) des Laser-Schweißkopfs (100) ein Messkopf (111) angeordnet ist, und dass der Messkopf (111) einen weiteren Umlenkspiegel (126) aufweist, welcher die dem Messkopf (111) zugeführte Strahlen umlenkt und zu der Sensoranordnung (120) leitet.

5. Laser-Schweißvorrichtung nach einem der vorangehenden Ansprüche, **dadurch gekennzeichnet, dass** der Abstand zwischen dem Faserende (3a) der mindestens einen Lichtleitfaser (3) und dem Eintrittsbereich (5a) der Strahlaufbereitungseinheit (5) veränderbar ist, und dass vorzugsweise die Lichtleitfaser (3) oder mindestens eine der Lichtleitfasern (3) und/oder die Strahlaufbereitungseinheit (5) zueinander relativ beweglich im Gehäuse (2) angeordnet sind.

6. Laser-Schweißvorrichtung nach einem der vorangehenden Ansprüche, **dadurch gekennzeichnet, dass** ein Endbereich (3`) mindestens einer Lichtleitfaser (3) in einer axialen Richtung verschiebbar im Gehäuse (2) des Laser-Schweißkopfs (1; 100) angeordnet ist.

7. Laser-Schweißvorrichtung nach einem der vorangehenden Ansprüche, **dadurch gekennzeichnet, dass** die Strahlaufbereitungseinheit (5) eine galvanometrische Strahlaufbereitungseinheit ist.

8. Laser-Schweißvorrichtung nach einem der vorangehenden Ansprüche, **dadurch gekennzeichnet, dass** der Laser-Schweißkopf (1; 100) mindestens eine Spanneinheit (4) aufweist, durch welche mindestens eine der Lichtleitfasern (3) im Gehäuse (2) in mindestens zwei Positionen festlegbar ist.

9. Laser-Schweißvorrichtung nach einem der vorangehenden Ansprüche, **dadurch gekennzeichnet, dass** im Gehäuse (2) des Laser-Schweißkopfs (1; 100) ein Innenrohr (9) angeordnet ist, und dass die Strahlaufbereitungseinheit (5) im Innenrohr (9) aufgenommen ist, und dass vorzugsweise das Innenrohr (9) im Gehäuse (2) des Laser-Schweißkopfs (1; 100) drehbar angeordnet ist.

10. Laser-Schweißvorrichtung nach einem der vorangehenden Ansprüche, **dadurch gekennzeichnet, dass** der Laser-Schweißkopf (1; 100) eine Kühleinrichtung (10) aufweist, durch welche aus dem Inneren des Gehäuses (2) Wärme abführbar ist.

11. Laser-Schweißvorrichtung nach dem vorangehenden Anspruch, **dadurch gekennzeichnet, dass** in einer das Innenrohr (9) lagernden Halterung (11) mindestens ein Kühlkanal (11c) der Kühleinrichtung (10) angeordnet ist, dem ein Kühlmedium (K) zuführbar ist, und dass vorzugsweise sich der Kühlkanal (11c) um zumindest einen Teil des Umfangsbereichs des die Strahlaufbereitungseinheit (5) aufnehmenden Innenrohrs (9) erstreckt.

12. Bearbeitungswerkzeug, insbesondere für eine Werkzeugmaschine, mit einer Laser-Schweißvorrichtung, **dadurch gekennzeichnet, dass** die Laser-Schweißvorrichtung nach einem der Ansprüche 1 bis 11 ausgebildet ist.

13. Bearbeitungsmaschine mit einem Bearbeitungswerkzeug, **dadurch gekennzeichnet, dass** das Bearbeitungswerkzeug gemäß Anspruch 12 ausgebildet ist.

14. Verfahren zur Überwachung der Schweißqualität einer von einer Laser-Schweißvorrichtung ausgebildeten Schweißstelle, **dadurch gekennzeichnet, dass** die Laser-Schweißvorrichtung nach einem der Ansprüche 1 bis 11 ausgebildet ist.
